(19) Europäisches Patentamt

European Patent Office

Office européen des brevets

(11) **EP 3 241 393 B1**

(12) **FASCICULE DE BREVET EUROPEEN**

(45) Date de publication et mention
de la délivrance du brevet:
**20.05.2020  Bulletin 2020/21**

(21) Numéro de dépôt: **15823513.5**

(22) Date de dépôt: **28.12.2015**

(51) Int Cl.:
*H04W 72/08* $^{(2009.01)}$    *H04W 72/02* $^{(2009.01)}$

(86) Numéro de dépôt international:
**PCT/EP2015/081312**

(87) Numéro de publication internationale:
**WO 2016/107854 (07.07.2016 Gazette 2016/27)**

(54) **PROCÉDÉ ET SYSTÈME DE GESTION DE RESSOURCES RADIO DANS UN RÉSEAU DE COMMUNICATION MOBILE**

VERFAHREN UND SYSTEM ZUR VERWALTUNG VON FUNKRESSOURCEN IN EINEM MOBILKOMMUNIKATIONSNETZWERK

METHOD AND SYSTEM FOR MANAGING RADIO RESOURCES IN A MOBILE COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **29.12.2014  FR 1403022**

(43) Date de publication de la demande:
**08.11.2017  Bulletin 2017/45**

(73) Titulaire: **THALES**
**92400 Courbevoie (FR)**

(72) Inventeurs:
• **HAZIZA, Nathalie**
  **92622 Gennevilliers Cedex (FR)**
• **LAMY-BERGOT, Catherine**
  **92622 Gennevilliers Cedex (FR)**
• **PAINCHAULT, Rémi**
  **92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-2014/045736**

• **"3rd Generation Partnership Project; Technical Specification Group Services and System Aspects; Study on Machine-Type Communications (MTC) and other mobile data applications communications enhancements (Release 12)", 3GPP STANDARD; 3GPP TR 23.887, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 20 décembre 2013 (2013-12-20), pages 1-151, XP050729146,**
• **VIZZIELLO A ET AL: "Cognitive Radio Resource Management Exploiting Heterogeneous Primary Users", GLOBAL TELECOMMUNICATIONS CONFERENCE (GLOBECOM 2011), 2011 IEEE, IEEE, 5 décembre 2011 (2011-12-05), pages 1-5, XP032119573, DOI: 10.1109/GLOCOM.2011.6134378 ISBN: 978-1-4244-9266-4 cité dans la demande**

EP 3 241 393 B1

**Description**

L'invention concerne un procédé et un système pour gérer des ressources radio dans un environnement hétérogène et en mobilité. Le terme hétérogène désigne des stations radios qui peuvent être différentes les unes des autres, soit physiquement, soit en termes de performances ou capacités de télécommunications, le terme mobilité correspond à une station mobile qui se déplace dans une zone géographique comprenant les stations radios mentionnées ci-dessus, passant d'une cellule de communication à une autre.

Dans un réseau où les stations radio sont mobiles et hétérogènes, un des problèmes posés est de gérer les ressources radio permettant à ces dernières d'accéder au support radio pour des communications. Les solutions actuelles connues du demandeur consistent, par exemple, en une gestion dynamique des liens radio dans le voisinage de la station mobile afin de s'adapter à l'environnement immédiat, et afin de satisfaire un niveau de service défini. Pour cela, il est possible d'utiliser des procédures de changement de cellule plus connues sous l'expression anglo-saxonne « handover » horizontal ou vertical, ou des réseaux tolérants aux retards, plus connus sous l'acronyme anglo-saxon « Delay Tolerant Network » ou réseau DTN.

Il est aussi connu d'utiliser une carte d'environnement radio connue sous l'expression anglo-saxonne « Radio Environment Map », en abrégé REM, ou cartographie radio qui permet d'améliorer le choix du lien radio. La REM stocke notamment des données environnementales, telles que des caractéristiques liées à la géographie, des services disponibles, des informations de régulation spectrale, le résultat de connexions réalisées lors d'expériences passées, les niveaux d'interférences rencontrées lors d'expériences passées, afin de déterminer pour un utilisateur mobile concerné un optimum local en termes de capacité de canal, dans le but notamment de faire cohabiter un utilisateur mobile opportuniste avec un utilisateur primaire.

L'état de l'art propose différentes techniques et utilisations de la REM. Pour chacune des solutions offertes, l'objectif est d'optimiser l'allocation radio pour un lien radio, afin de respecter au maximum les contraintes de qualité de service QoS, avec comme écueil éventuel de « sur-allouer » la ressource radio, aucun relâchement de contraintes n'étant envisagé.

Le document intitulé « Cognitive radio resource management exploiting heterogeneous primary users and a radio environment map » de A. Viziello and al- Wireless Netw. (2013) 19 :1203-1216 décrit un système de Radio Cognitive associée à une REM stockant des informations relatives à un utilisateur primaire afin de rendre possible ou d'optimiser l'accès au spectre radio à un ou plusieurs utilisateurs opportunistes. Ce système comporte de longs intervalles temporels qui conduisent à une utilisation du spectre non optimale.

Le cadre développé pour le standard MIH/IEEE 802.21 de sondage d'un environnement radio et d'allocation dynamique afin d'optimiser les handovers verticaux utilise des remontées de qualité du lien radio pour aider à la décision d'allocation, afin de faire une gestion dynamique des ressources radio. Il n'y a pas d'utilisation de REM a priori, en particulier aucune prédiction sur un parcours d'une station radio n'est envisagée. On remonte l'information d'un lien se dégradant, en attente d'une allocation sur un autre lien respectant la contrainte de qualité de service QoS requise.

Le standard de communication mobile LTE/ LTE-Advanced du 3GPP (en anglo-saxon « Long Term Evolution ») propose une optimisation de l'allocation radio dans un voisinage : une mise à jour régulière d'une table caractérisant les cellules au voisinage d'un utilisateur mobile est effectuée afin d'optimiser les handovers. Là encore, il s'agit d'une gestion dynamique à un instant donné, sans exploitation ultérieure de la table REM créée.

Malgré les avantages procurés par les solutions de l'art antérieur, ces dernières offrent toutefois certains inconvénients, par exemple :

- Une sous-optimalité, soit par remontée au niveau de l'utilisateur mobile des informations de sondage de l'environnement radio le concernant, soit par l'utilisation d'une REM relative à l'environnement des utilisateurs primaires à sa position, la solution d'allocation sera optimale seulement pour le terminal mobile, et non pas pour un ensemble de nœuds ou stations mobiles dans le voisinage. Dans le cas où l'on cherche à disséminer dans le réseau des états de connexion au-delà du voisinage, ceci est alors coûteux en termes de signalisation et sujet à une éventuelle latence de mise à jour liée à la transmission,
- La solution est causale, à son arrivée dans une position un utilisateur mobile ne peut pas anticiper la situation,
- La gestion des liens « court-terme » se déduit du point précédent, cela induit des handovers fréquents.

Les solutions offertes par l'art antérieur ne traitent pas les problèmes suivants :

- La signalisation importante par rapport à une baisse de débit et de latence induite,
- Dans la plupart des terminaux, la phase de sondage et la phase de transmission s'effectuent de manière exclusive, donc la phase de sondage ou de remontée des caractéristiques des liens radio se fait au détriment de celle de transmission.

La demande de brevet WO 2014/045736 divulgue une méthode et un dispositif pour la gestion de l'énergie (mécanisme de contrôle de puissance, batterie). Le procédé décrit dans D1 va appliquer le délai uniquement si la qualité des signaux radio ne satisfait pas à un critère de qualité. Ainsi dans D1, si la qualité des signaux radio est considérée comme suffisante, il n'y a pas d'application de délai, dans le cas contraire, le procédé applique un délai.

Il existe ainsi un besoin de disposer d'un procédé et d'un système permettant de gérer les ressources radio afin de fournir un meilleur niveau de service possible aux différents nœuds d'une zone géographique, en prenant en compte les besoins des différents nœuds et une stratégie d'allocation variable dans le temps. Plus particulièrement, le problème technique est notamment de pouvoir se reconfigurer efficacement et dynamiquement lorsqu'un lien ne permet plus de fournir le service demandé, mais également de pouvoir anticiper la défaillance de liens. L'invention est saisie dans les revendications jointes.

Dans la suite de la description, on utilisera indifféremment les expressions « terminal mobile », « station mobile », « utilisateur mobile », pour désigner un même terminal mobile d'un réseau de communication. L'expression « QoS cible » désigne une qualité de service exprimée par une requête de communication émise par un utilisateur mobile.

Le procédé selon l'invention repose notamment sur la mise en œuvre d'un mécanisme conjoint à l'utilisation d'une base de données REM d'expérience stockant les données d'environnement radio selon les dimensions espace, temps, fréquence (cartographie radio 3 D) afin de gérer de manière globale à une zone, l'accès opportuniste aux liens radio disponibles, en déterminant un optimum pour un ensemble d'utilisateurs.

L'invention concerne un procédé pour la gestion de ressources radio au sein d'un réseau de communication R comprenant au moins une base de données centrale $REM_C$ contenant des informations relatives à la planification du réseau de communication R à un instant donné, une ou plusieurs stations mobiles comprenant une base de données contenant des informations sur un environnement radio de la station mobile, caractérisé en ce qu'il comporte au moins les étapes suivantes :

- transmettre une requête de communication Rq émise par une station mobile à un module d'algorithme d'analyse REM et aussi à une base de données REMri de la station mobile, la requête de communication Rq comportant des caractéristiques liées aux contraintes d'une qualité de service QoS,
- analyser en exécutant l'algorithme d'analyse les paramètres de communication contenus dans la requête Rq en tenant compte de la qualité de service requise QoS et de paramètres caractérisant une situation radio dans une zone de couverture donnée et à un instant donné, les paramètres étant délivrés par la REMri,
- déterminer s'il existe une contrainte de latence dans la requête Rq et en déduire un délai d'attente Δt,

  - si la requête Rq peut tolérer le délai d'attente Δt avant d'établir la communication, transmettre la requête Rq à une étape de temporisation avant de l'analyser à nouveau par le module d'analyse REM,
  - si la requête Rq ne peut tolérer un retard dans l'établissement de la communication, alors allouer un lien de communication au terminal mobile,
  - initier la communication, et transmettre des données et en fin de communication retourner un compte-rendu comprenant des informations relatives à des évènements survenus lors de la communication.

Selon un mode de réalisation l'algorithme d'analyse comporte les trois phases suivantes :

- calculer la valeur de QoS disponible,
- calculer la probabilité que la QoS cible soit supportée par la QoS allouable sur un lien,
- vérifier pour chaque fréquence/canal de la zone de couverture d'une station mobile la probabilité que la contrainte QoS cible est respectée et en fonction de cette valeur de probabilité choisir le lien à attribuer.

Le calcul des probabilités peut être effectué en considérant un paramètre caractérisant le lien radio QI en exécutant les étapes suivantes :

- prendre une hypothèse de distribution gaussienne,
- le paramètre cible : QI étant connu dans la requête Rq, le paramètre disponible sur le lien étant calculé $QI_{LIEN}$, $\mu_i$ et $\sigma_i$ étant respectivement la moyenne et l'écart-type associés à chaque lien radio $i$, déterminer la probabilité que le paramètre $QI_{QOS-CIBLE}$ soit inférieur au paramètre $QI_{LIEN}$ allouable sur un lien radio i: $P_r$ ($QI_{QOS-CIBLE} \leq QI_{LIEN}$)

avec : $\mathrm{Pr}\left(Ql_{QOS-CIBLE} \leq Ql_{LIEN}\right) = 1 - \mathrm{erf}(\frac{Ql_{QOS-CIBLE}-\mu_i}{\sigma_i})$ où erf est la fonction mathématique fonction erreur,

- connaissant les liens disponibles et les probabilités sur chacun de ces liens appliquer une fonction de coût et déterminer le lien à utiliser pour satisfaire une qualité de service d'une requête Rq.

On peut utiliser comme paramètre caractérisant un lien radio, le débit cible D$_{QOS-CIBLE}$ pour le paramètre QoS requis et le débit disponible sur le lien calculé D$_{LIEN}$.

Pour la mise en œuvre du procédé, on peut choisir comme paramètre de qualité de service à respecter tout paramètre caractérisant la qualité de service tel que le taux d'erreurs, la largeur de bande, la latence autorisée.

Le procédé peut aussi comporter l'exécution d'une tâche de fond exécutée sur une station mobile en dehors de l'étape d'émission des données afin de sonder l'environnement radio d'une station mobile, en choisissant des valeurs de fréquences stockées dans la REMri et sur une zone élargie comprenant la cellule contenant la station mobile et des cellules voisines afin de déterminer les données de la REMri de la station mobile.

Selon une variante de réalisation, sur réception d'une information d'événement prioritaire, l'algorithme d'analyse interrompt la communication en cours et attribue le lien radio à la communication prioritaire.

Selon une autre variante, sur réception d'un évènement modifiant l'environnement radio au cours d'une communication ou de l'établissement d'un lien de communication, l'information est transmise à l'algorithme d'analyse, et une modification est envoyée en retour pour s'adapter à la nouvelle situation.

L'invention concerne aussi un système pour la gestion de ressources radio au sein d'un réseau de communication R comprenant au moins une base de données centrale REM$_C$ contenant des informations relatives à la planification du réseau à un instant donné, une ou plusieurs stations mobiles comprenant une base de données REMri contenant des informations sur un environnement radio de la station mobile, caractérisé en ce qu'une station mobile est équipée d'un module d'algorithme d'analyse REM configuré pour analyser les paramètres de communication contenus dans une requête de communication Rq en tenant compte de la qualité de service requise QoS et de paramètres caractérisant une situation radio dans une zone de couverture donnée et à un instant donné, déterminer s'il existe une contrainte de latence dans la requête Rq, un module de décision fournissant l'autorisation d'initier une communication et les liens de communication à utiliser ou bien la transmission de la requête Rq à un module de temporisation en fonction d'un paramètre de latence contenu dans la requête Rq, un module d'émission de données une fois la communication établie, un module d'établissement d'un rapport de communication en liaison avec la base de données de la station mobile.

Le module d'analyse est, par exemple, adapté à exécuter les étapes suivantes :

- calculer la valeur de QoS disponible,
- calculer la probabilité que la QoS cible soit supportée par la QoS allouable sur un lien,
- vérifier pour chaque fréquence/canal de la zone de couverture d'une station mobile, la probabilité que la contrainte QoS cible est respectée, et en fonction de cette valeur de probabilité choisir le lien à attribuer.

Le module d'analyse est, par exemple, adapté à calculer des valeurs de probabilités en considérant comme paramètre de qualité de service le paramètre débit et le procédé comporte les étapes suivantes :

- prendre une hypothèse de distribution gaussienne,
- le paramètre caractérisant le lien radio QI$_{QOS-CIBLE}$ étant connu dans la requête Rq, le paramètre QI caractérisant le lien étant calculé QI$_{LIEN}$, avec $\mu_i$ et $\sigma_i$ respectivement la moyenne et l'écart-type associés à chaque lien radio $i$,
- déterminer la probabilité que le paramètre cible QI$_{QOS-CIBLE}$ soit inférieur au paramètre disponible QI$_{LIEN}$ allouable sur un lien radio i: Pr (QI$_{QOS-CIBLE}$ ≤ QI$_{LIEN}$) avec $\Pr\left(Ql_{QOS-CIBLE} \leq Ql_{LIEN}\right) = 1 - \mathrm{erf}(\frac{Ql_{QOS-CIBLE}-\mu_i}{\sigma_i})$

où erf est la fonction mathématique fonction erreur, et en ce que
- le module de décision est adapté à déterminer le lien à utiliser pour satisfaire une qualité de service d'une requête Rq en tenant compte des liens disponibles et des probabilités sur chacun de ces liens.

D'autres caractéristiques et avantages de la présente invention apparaîtront mieux à la lecture de la description qui suit donnée à titre illustratif et nullement limitatif, annexée des figures qui représentent :

- La figure 1, un exemple de réseau mobile,
- La figure 2A et la figure 2B, deux schémas représentant des modules et des étapes mis en œuvre par le procédé selon l'invention,
- La figure 3, une illustration pour un porteur mobile,
- La figure 4, un schéma de répartition du débit disponible pour une zone de couverture,
- La figure 5A, 5B, un exemple numérique de distribution de liens,
- La figure 6, un exemple de mise en œuvre du procédé, et
- Les figures 7A, 7B, 7C et 7D, un exemple d'exécution des étapes.

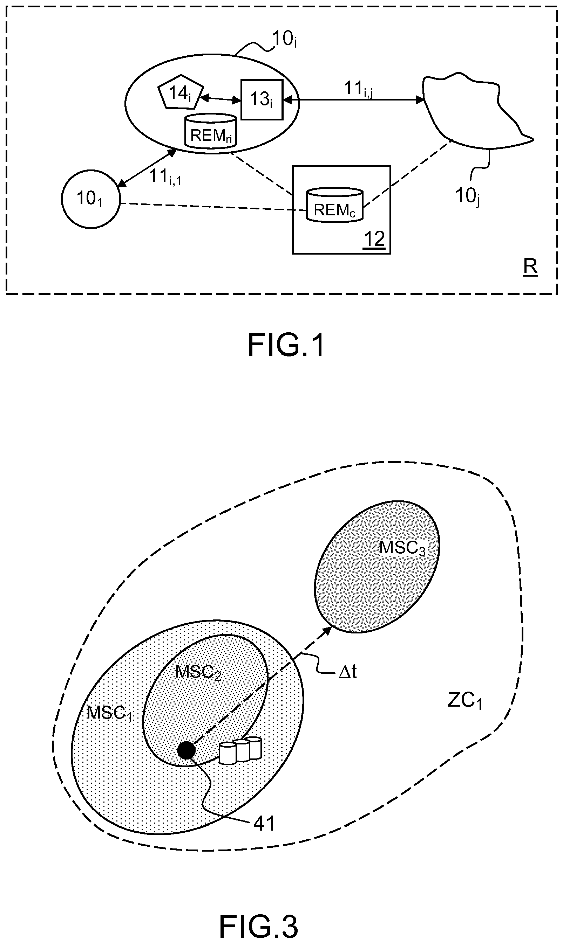

La figure 1 illustre un exemple de réseau mobile comprenant plusieurs nœuds ou stations mobiles 10i, plusieurs liens de communications 11i, j sans fil connectant les stations mobiles les unes aux autres, un serveur 12 conservant une base de données REMc ou REM centrale en liaison avec les stations mobiles. Chaque station mobile 10i comprend un module de communication 13i avec les autres stations mobiles par l'intermédiaire de liaisons sans fil, un processeur 14i pour l'exécution des étapes du procédé selon l'invention, et pour la gestion des échanges avec les autres nœuds, une REMri réduite.

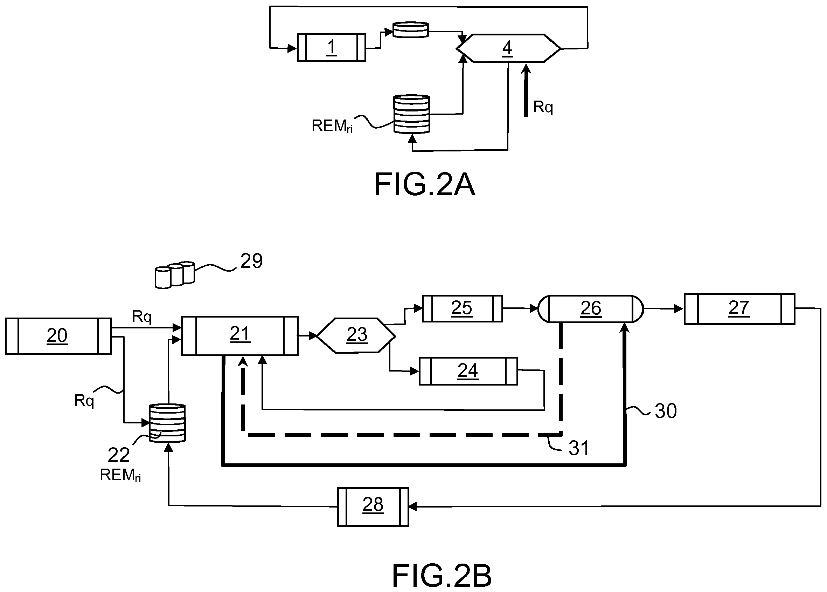

Les figures 2A et 2B schématisent des modules qui vont être implémentés au niveau de terminaux mobiles faisant partie d'un réseau de communication. La REMri dans le cas d'un terminal mobile pourra être une image allégée d'une REM centrale située au niveau d'un serveur central auquel les terminaux mobiles sont reliés par des liens radio, par exemple.

La figure 2A est un schéma représentant une tâche de fond effectuée en permanence durant une mission. Elle comprend une étape 1 de sondage de l'état de l'environnement radio, i.e. déterminant les liens radio occupés ou libres, par exemple sur l'ensemble des fréquences planifiées pour une mission ou une application, puis une étape de comparaison 4 entre les mesures effectuées par un terminal mobile et les éléments de la base de données REMri radio embarquée, version réduite de la REMc centrale située sur le serveur non représenté pour des soucis de simplification, afin de mettre à jour et ajuster le contenu de cette REM.

L'expression « REM réduite » signifie que l'on va par exemple élaborer une REMri à partir de la REM centrale, en choisissant une zone géographique pour un terminal mobile restreinte par rapport à la zone géographique associée à la REM centrale. La restriction pourrait aussi se faire en choisissant une plage de fréquence ou une zone temporelle moins large que celle de la REM centrale et plus adaptée à un terminal mobile donné.

La figure 2B schématise un exemple de modules et d'étapes qui vont être mis en œuvre par le procédé selon l'invention, au niveau de chaque station mobile 10i émettant une requête de communication Rq.

Une requête de communication Rq émise par une station mobile 10i comporte des paramètres de qualité de service QoS à respecter, comprenant en particulier des paramètres de débit et de latence. La requête est émise par exemple par le niveau applicatif 20 d'un terminal mobile. La requête Rq est transmise à un module d'algorithme d'analyse REM 21 et aussi à une base REMri 22. La base REMri, 22, va émettre vers le module d'analyse REM 21 un ensemble de paramètres répondant à la requête Rq. Le module d'analyse REM 21 effectue une analyse de la situation radio à l'instant d'émission de la requête Rq, en tenant compte des données produites par la REM et des contraintes de qualité de service QoS imposées dans la requête Rq et représentatives d'une application donnée. Le module d'analyse va aussi prendre en compte le paramètre latence inclus dans la requête. Le résultat de l'analyse est transmis à un module de décision 23 qui comprend des règles de stratégie d'attribution de liens ou des règles de décision d'attribution de liens.

Si la requête de communication Rq peut tolérer un délai d'attente $\Delta t$ avant d'établir la communication, par exemple selon la valeur du paramètre latence indiqué dans la requête, alors les paquets à transmettre, 29, sont envoyés vers un module de stockage 24 en attendant de disposer d'un lien plus favorable aux contraintes de qualité de service QoS, pour initier la communication. Lorsque la valeur de temporisation est écoulée, la requête Rq est à nouveau examinée, avec les nouveaux paramètres de transmission : paramètres transmis par la REMri mise à jour après la temporisation, pour prendre en compte les conditions radios mises à jour ainsi que les contraintes de qualité de service QoS, puisque la possibilité de latence se réduit. Si la requête Rq peut à nouveau tolérer un délai d'attente, on réitère cette étape, sinon, on va à une étape de traitement correspondant à un état de « non tolérance de retard » de transmission décrite ci-après.

Si la requête Rq ne peut tolérer un retard dans l'établissement de la communication, alors le module de décision 23 alloue, 25, un lien de communication au terminal mobile. Les terminaux mobiles dans le voisinage ayant des capacités d'écouter selon l'invention, prendront l'état du lien en compte, lien occupé et non disponible, pour leur propre stratégie d'allocation. Le lien établi, la communication peut avoir lieu, 26, à moins d'un évènement d'urgence l'interrompant, 30. Le lien radio est maintenu jusqu'à la fin de la communication 27. En fin de communication 27, le procédé va remonter vers la base de données REM un compte-rendu CR, 28, comprenant des informations significatives qui sont apparues lors des communications établies, par exemple des données de qualité de liaison, des informations sur la localisation d'une station mobile, des indices d'une modification majeure de l'environnement radio, une rupture de service, des informations statistiques sur les connectivités, ceci afin d'améliorer les données mémorisées dans la REM, en rendant son contenu plus proche de la réalité de fonctionnement du système. La REM centrale est mise à jour en fin de mission, lors du retour de la station mobile à un « point d'ancrage »; cette mise à jour se fait par lien radio local, par exemple.

Dans le cas où un évènement qui modifie l'environnement radio survient au cours d'une communication ou au cours de l'établissement d'un lien de communication, 31, par exemple un lien radio tombant, une situation d'information du voisinage des terminaux mobiles du réseau fortement modifiée, l'impossibilité de respecter la QoS avec le lien radio disponible, alors le procédé va transmettre cette information de modification d'environnement radio à l'algorithme d'analyse, qui va en tenir compte et procéder en retour à une modification de son analyse; cette nouvelle analyse sera transmise au module de décision 23 qui prendra en conséquence une décision adaptée à la nouvelle situation, soit de temporiser 24 soit d'établir un lien 25 (le lien établi pouvant être le même que précédemment mais avec des paramètres différents).

Dans le cas où un évènement prioritaire survient en cours de communication, alors l'algorithme d'analyse va interrompre, 30, la communication ou l'établissement de la communication en cours.

Le procédé comprend une étape d'analyse a posteriori, réalisée au niveau du module d'analyse 28, pour quantifier l'adéquation entre le lien radio alloué à un instant donné et la contrainte de qualité de service QoS, selon un principe connu de l'homme du métier, en mettant en œuvre des analyses statistiques et un filtrage des événements de connexion. Le module 28 placé entre la fin de communication et la REM locale effectuera la mise à jour, l'analyse statistique et le filtrage des événements. Les statistiques mettront en œuvre des principes d'analyses statistiques connus de l'homme du métier.

On va maintenant décrire de façon plus détaillée un exemple de tâches, requêtes et modules participant au procédé selon l'invention et leur fonctionnalité.

*Tâche de fond*

Une tâche de fond s'exécute sur chacune des stations mobiles du réseau de communication et correspond à un sondage avancé de l'environnement radio effectué hors phase d'émission :

- Le sondage sera limité à un ensemble de valeurs fréquences F/canaux CH, jugés d'intérêt (information provenant de la REM de la station mobile), afin d'accélérer le sondage,
- Les informations fournies ne se limitent pas à une disponibilité des liens radios (libre/pas libre), mais des caractéristiques de qualité de lien complémentaires sont accessibles (informations quantitatives caractérisant usuellement un lien radio, tels que le débit ou la largeur de bande, la latence autorisée, les taux d'erreurs).

Ce sondage se fera sur une zone de couverture élargie correspondant à la cellule dans laquelle se trouve une station radio, mais aussi dans des cellules voisines, avec une planification a priori des changements de cellule plus connus sous l'expression anglo-saxonne Handovers ou HO, et de l'occupation de la ressource radio sur des couples {fréquence /canal; capacités des canaux ou MCS}. Le sondage est évidemment moins prioritaire que la communication.

*Requête de communication*

L'objectif de l'analyse REM + QoS est de fournir pour chaque lien radio Li,j accessible dans une zone de couverture donnée, une évaluation de la probabilité que la QoS cible indiquée au niveau d'une requête d'émission Rq soit supportée par la QoS allouable sur le lien. Pour cela, l'algorithme d'analyse exécuté au sein du module d'analyse 21 est découpé en trois phases détaillées au fur et à mesure de la description qui suit:

Phase 1. Le calcul du paramètre de QoS disponible, basé sur les informations radios fournies par la REM en fonction de la position géographique de la station mobile, et en application des schémas applicables (MCS) pour les fréquences/canaux considérés,

Phase 2. Le calcul de probabilités afin que la QoS cible soit supportée par les QoS disponibles,

Phase 3. La vérification que les contraintes de QoS soient remplies.

La décision finale sur le choix du lien se fera précisément dans le module « décision lien » et va correspondre à l'application d'une stratégie ou de règles liées à des considérations de fonctionnement du système telles que, le coût financier, l'usage de ressources propres, la prise en compte de différents niveaux de priorité.

Pour l'analyse de la QoS, on utilisera un paramètre $P_{QOS}$ quantifiant la QoS considérée :

- $P_{QOS-CIBLE}$ désignera la valeur cible requise par l'application pour le paramètre de QoS, indiquée dans la requête Rq,
- $P_{LIEN}$ correspond à la valeur qu'un lien radio est capable de fournir pour ce paramètre QoS. Cette valeur est fournie par la REM qui traduit ce que l'environnement est capable d'offrir.

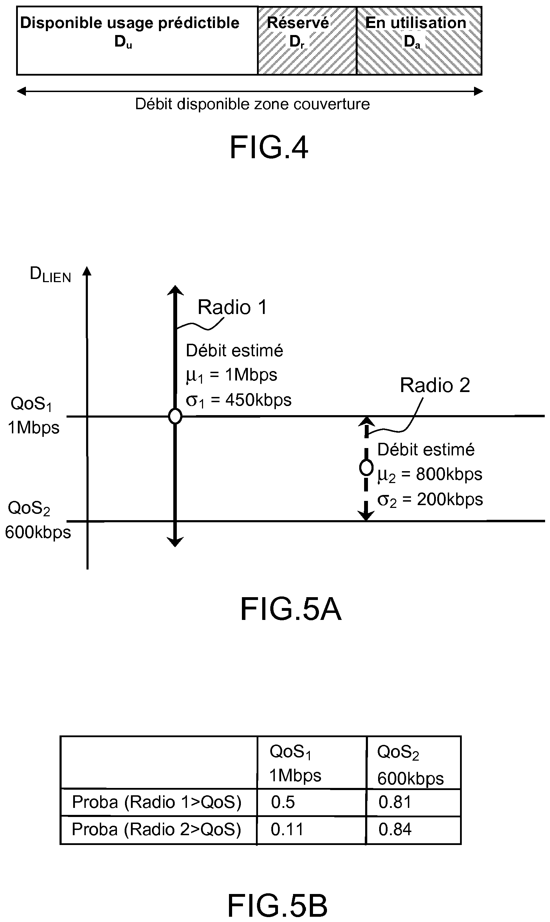

Pour une meilleure compréhension de cet algorithme, on utilisera un exemple illustré aux figures 3, 4 en s'intéressant au débit disponible et au débit cible comme paramètre caractérisant un lien radio.

On considère un porteur mobile 41, situé dans une zone de couverture ZC1, dans laquelle sont accessibles trois fréquences/canaux, chacun avec des capacités différentes, que l'on notera MCS1, MCS2 ou MCS3. MCS1 et MCS2 sont immédiatement disponibles, avec des caractéristiques différentes, tandis que pour MCS3 un délai d'attente $\Delta t$ est nécessaire avant l'établissement de la communication et la transmission de données.

Le paramètre de QoS utilisé à titre d'exemple non limitatif, correspond au débit à transmettre D, avec les définitions :

- Débit cible : $D_{QOS\text{-}CIBLE}$,
- Débit possible sur le lien : $D_{LIEN}$.

*Calcul du paramètre de QoS disponible.*

La REM va fournir des informations liées à la fois à la qualité du lien radio et à des statistiques sur l'utilisation effectuée sur ce lien (historique d'utilisation). Le but est notamment de déterminer la part de débit disponible pour l'utilisation sur ce lien, afin d'initier la communication et la transmission de données. Si on reprend l'exemple d'illustration avec le débit, figure 4, on identifie dans le débit maximum accessible :

- La proportion $D_a$ du débit en utilisation (alloué à d'autres utilisateurs): cette valeur est obtenue soit par écoute (sur des fréquences orthogonales FOs de type TDMA par exemple), soit par prédiction, soit par une combinaison des deux,
- La proportion $D_r$ du débit réservée (part de sécurité, typique pour des requêtes de préemption),
- La proportion $D_u$ de débit disponible.

Le débit disponible correspond donc à la différence entre le débit total et une marge:

- Le débit total $D_t$ : valeur maximale que l'on peut attendre, compte-tenu des caractéristiques du lien radio considéré. Cette valeur est obtenue par prédiction,
- La marge $D_m$ : somme du débit réservé $D_r$ et du débit en utilisation $D_a$. C'est une variable aléatoire dépendant de l'usage prédictible et d'un talon variable affecté à un usage possible dans le cas d'une indication prioritaire. Cette valeur de marge provient de la REM et est affinée par apprentissage en utilisant des informations de la REM mises à jour lors du fonctionnement du procédé.

*Calcul de probabilités.*

Le paramètre lié à la qualité de service QoS et disponible sur le lien radio considéré, $P_{LIEN}$, permet d'introduire une représentation probabiliste des données. En prenant une hypothèse de distribution gaussienne, on peut calculer la probabilité que le paramètre de QoS cible requis par l'application soit supporté par le paramètre allouable sur le lien donné par la REM.

Pour illustrer ce calcul, on reprend l'exemple du débit :

- On connaît le débit cible: $D_{QOS\text{-}CIBLE}$, pour le paramètre QoS requis,
- Le débit disponible sur le lien est calculé $D_{LIEN}$,
- On note $\mu_i$ et $\sigma_i$ respectivement la moyenne et l'écart-type associés à chaque lien radio $i$.

Ainsi, il est possible de déterminer la probabilité que le débit cible soit inférieur au débit allouable sur le lien :

$\Pr(D_{QOS\text{-}CIBLE} \leq D_{LIEN})$ : $\Pr\left(D_{QOS-CIBLE} \leq D_{LIEN}\right) = 1 - \mathrm{erf}(\frac{D_{QOS-CIBLE} - \mu_i}{\sigma_i})$ où erf est la fonction mathématique connue sous l'expression « fonction erreur ».

De manière plus générale, en considérant un paramètre QI caractérisant le lien radio à la place du paramètre « débit », on obtient la relation :

$$\Pr(Q_{IQOS\text{-}CIBLE} \leq Q_{LIEN}),$$

$$\Pr\left(Ql_{QOS-CIBLE} \leq Ql_{LIEN}\right) = 1 - \mathrm{erf}(\frac{Ql_{QOS-CIBLE} - \mu_i}{\sigma_i})$$

avec QI le paramètre cible et $Q_{LIEN}$ le paramètre disponible sur le lien radio.

La valeur de probabilité trouvée est comparée par exemple à une valeur seuil $P_{seuil}$ pour décider du lien radio à attribuer. Cette décision fait partie de la stratégie choisie pour l'attribution des liens: on peut choisir une stratégie composée de règles simplistes avec comparaison à un seuil, ou une mise en place progressive de règles de plus en plus élaborées.

On peut illustrer ce principe avec l'exemple numérique suivant et représenté aux figures 5A, 5B. On considère les deux liens radio, LR$_1$, LR$_2$, avec respectivement des débits estimés de 1Mbps et de 800 kbps. Après le calcul de probabilités, on constate que le lien radio LR$_2$ est plus adapté pour transmettre la communication avec QoS de 600kbps. Cette étape permet de fournir à l'étape suivante d'analyse du respect des contraintes QoS, des données quantitatives pour l'aide à la décision. Il est ainsi possible pour chaque fréquence/canal de la zone de couverture de déterminer la probabilité de respecter la contrainte de QoS.

*Remplit-on les contraintes de QoS ?*

En poursuivant avec l'exemple du débit comme paramètre de QoS, à ce stade on dispose des liens disponibles, ainsi que des probabilités sur chacun de ces liens de respecter la QoS.
L'idée est donc d'appliquer une fonction coût au sens large, faisant intervenir des critères de choix liés la stratégie à appliquer :

- Aspect financier avec le coût effectif, typiquement l'exemple du coût d'une liaison satellite,

- Aspect utilisation des ressources (préservation ou pas des ressources propres),

- Aspect gestion des priorités, qui peut varier d'une configuration à l'autre.

Quelques exemples sont donnés ci-après au niveau du tableau, avec comme paramètres considérés, le débit et les liens avec des caractéristiques MCS1, MCS2 et MCS3 :

| | | description | probabilités | choix | Commentaires |
|---|---|---|---|---|---|
| | ① | D$_{QOS-CIBLE}$ sur MCS1, MCS2 et MCS3 avec latence de t1, t2 et Δt + t3 (délai en attendant d'être en visibilité de MCS3). | MCS1 → 100% MCS2 → 95% MCS3 → 100% | MCS1 | Le débit peut être respecté sans délai d'attente, on choisit d'émettre au plus vite. |
| | ② | D$_{QOS-CIBLE}$ sur MCS1, MCS2 et MCS3 avec latence de t1, t2 et Δt + t3 (délai en attendant d'être en visibilité de MCS3). | MCS1 → 80% MCS2 → 80% MCS3 → 100% | MCS3 | Compatible des contraintes et préserve la ressource radio en MCS1 et MCS2. |
| | ③ | Même configuration que ① mais avec réduction de la qualité du lien sur MCS1 et pas de tolérance de délai. | MCS1 → 50% MCS2 → 95% MCS3 → 100% | MCS2 | Compatible des contraintes de débit et de latence. |
| | ④ | Même configuration que ① mais avec réduction de la qualité du lien sur MCS1, et une pénalité de coût sur MCS2. | MCS1 → 50% MCS2 → 95% MCS3 → 95% | MCS3 | Application de règles de stratégie. |

La décision d'attribution de lien se fera par le module de « décision liens » en appliquant les règles de stratégie décidées en début de mission.

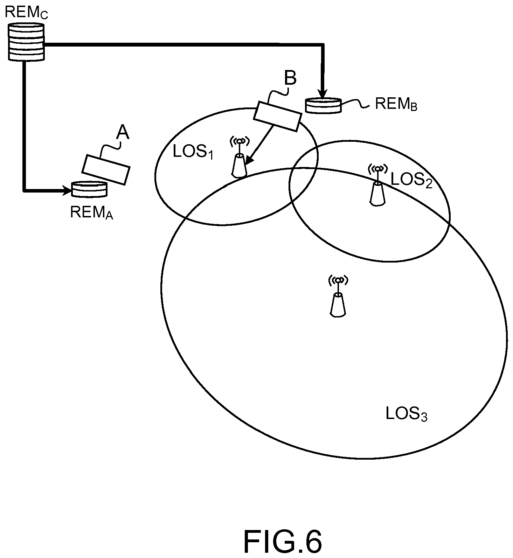

La figure 6 illustre un exemple de déroulement d'une mission en considérant deux plateformes A et B dans un environnement radio constitué de trois liens (LOS1, LOS2 et LOS3), dont les couvertures sont de nature différentes (taille, positions géographiques). Chaque plateforme A, B dispose d'une version embarquée REM$_A$, REM$_B$ de la REM centrale REM$_C$ (réduction de la REM à la zone géographique envisagée pour le parcours).

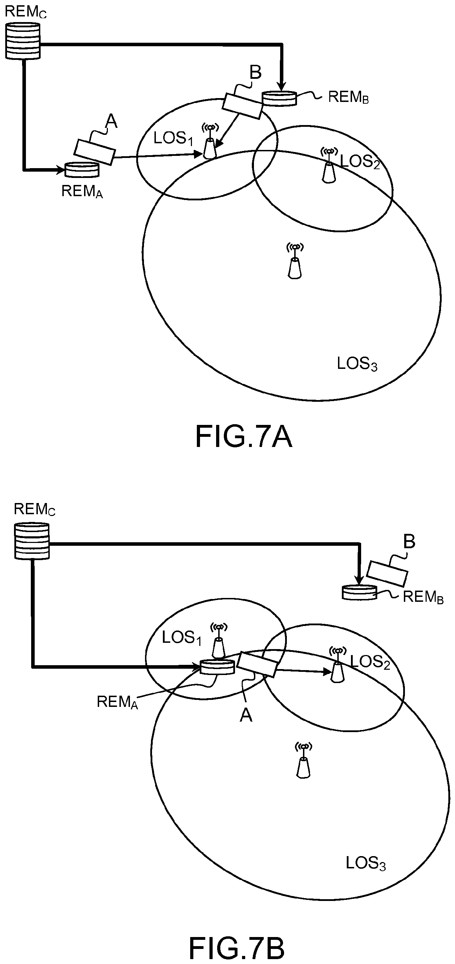

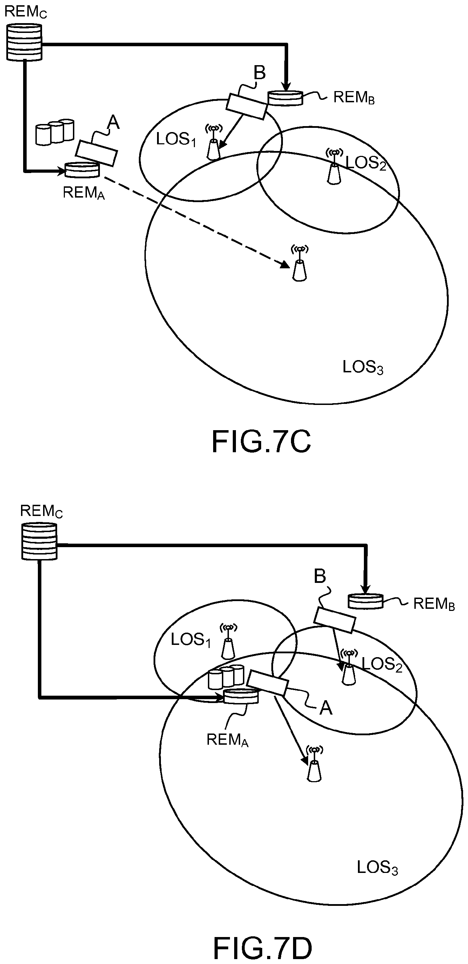

Les figures 7A, 7B, 7C et 7D illustrent deux scénarios possibles dans l'allocation des liens.

Sur la figure 7A, les critères de QoS des plateformes A et B peuvent être respectées avec le lien LOS1. B voit son lien alloué, tandis que pour la plateforme A, le lien avec le LOS1 est planifié.

Sur la figure 7B, les parcours des plateformes A et B se poursuivent. La plateforme A passe de la zone couverte par le LOS1 à celle couverte par le LOS2, tandis que la plateforme B quitte cette zone.

Sur la figure 7C, lors de l'analyse de situation, on se rend compte que les besoins en termes de QoS de la plateforme B seront très exigeants vis-à-vis du LOS1. En revanche, pour sa communication, la plateforme A peut tolérer un délai par stockage des paquets à transmettre. Dans ce cas, l'allocation de lien pour la plateforme A est temporisée mais déjà planifiée vers LOS3.

Sur la figure 7D, les parcours des plateformes A et B se poursuivent, avec pour chacune d'entre elles des liens alloués sur des points radio différents, afin d'optimiser les contraintes de QoS.

Le procédé selon l'invention est générique, même si l'utilisation de la REM et l'analyse de contexte pour la gestion des liens s'appuient sur les données radio, elles-mêmes liées aux couches physiques des standards considérés, la méthode permettant de rendre le meilleur service ne dépend pas que des caractéristiques intrinsèques des liens, elle utilise la prédiction et l'apprentissage. Elle permet d'allouer les liens radio à plusieurs stations mobiles en proposant une configuration qui optimisera le service global.

Le procédé repose sur un apprentissage de l'environnement radio, ce qui est particulièrement bien adapté à un déploiement et à une utilisation sur une zone définie, un théâtre d'opération, un aéroport, une région côtière.

En outre, ce procédé étend dans le temps la gestion des liens radio :

- avant le parcours d'une zone prédéfinie : une planification de la mission est effectuée afin de simplifier le sondage et d'utiliser une connaissance a priori de l'historique temporel de la REM ;
- durant le parcours d'une station mobile, l'allocation radio se fait dynamiquement, en permettant à la station mobile d'anticiper les événements (liens KO, nombre de nœuds importants dans une zone...) ou de limiter le cas échéant l'impact d'événements inopinés,
- après le parcours, une remontée des données significatives vers la REM centrale permet d'une part de confirmer ou de corriger les informations de couverture radio, mais d'autre part, permet de stocker également une métrique quantifiant la qualité du choix d'allocation, pour une utilisation sur les parcours à venir.

## Revendications

**1.** Procédé pour la gestion de ressources radio au sein d'un réseau de communication R comprenant au moins une base de données centrale $REM_C$ contenant des informations relatives à la planification du réseau de communication R à un instant donné, une ou plusieurs stations mobiles (10i) comprenant une base de données (REMri, 22i) contenant des informations sur un environnement radio de la station mobile, comportant au moins les étapes suivantes :

    • transmettre une requête de communication Rq émise par une station mobile (10i) à un module d'algorithme d'analyse REM (21) et aussi à une base REMri (22) de la station mobile, la requête de communication Rq comportant des caractéristiques liées aux contraintes d'une qualité de service QoS,
    • analyser par l'algorithme d'analyse les paramètres de communication contenus dans la requête Rq en tenant compte de la qualité de service requise QoS et de paramètres caractérisant une situation radio dans une zone de couverture donnée et à un instant donné émis par la REMri,
    • déterminer s'il existe une contrainte de latence dans la requête Rq et en déduire un délai d'attente $\Delta t$,
    • si la requête Rq peut tolérer le délai d'attente $\Delta t$ avant d'établir la communication, transmettre la requête Rq à une étape de temporisation (24) avant de l'analyser à nouveau par le module d'algorithme d'analyse REM (21),
    • si la requête Rq ne peut tolérer un retard dans l'établissement de la communication, alors allouer (25) un lien de communication au terminal mobile, initier la communication (26), transmettre des données et en fin de communication retourner à la base REMri un compte-rendu (28) comprenant des informations relatives à des évènements survenus lors de la communication.

**2.** Procédé selon la revendication 1 où l'algorithme d'analyse comporte les trois phases suivantes :

    - calculer la valeur de QoS disponible,
    - calculer la probabilité que la QoS cible soit supportée par la QoS allouable sur un lien,
    - vérifier pour chaque fréquence/canal de la zone de couverture d'une station mobile la probabilité que la contrainte QoS cible est respectée, et en fonction de cette valeur de probabilité choisir le lien à attribuer.

3. Procédé selon la revendication 2 où le calcul des probabilités en considérant un paramètre caractérisant le lien radio QI comporte les étapes suivantes :

   - prendre une hypothèse de distribution gaussienne,
   - le paramètre cible : QI étant connu dans la requête Rq, le paramètre disponible sur le lien étant calculé QI$_{LIEN}$ et, avec $\mu_i$ et $\sigma_i$ correspondant respectivement à la moyenne et à l'écart-type associés à chaque lien radio $i$, déterminer la probabilité que le paramètre QI$_{QOS\text{-}CIBLE}$ soit inférieur au paramètre QI$_{LIEN}$ allouable sur un l$_{ien}$
   radio i: P$_r$ (QI$_{QOS\text{-}CIBLE}$ ≤ QI$_{LIEN}$) avec : $\Pr\left(Ql_{QOS-CIBLE} \leq Ql_{LIEN}\right) = 1 - \mathrm{erf}(\frac{Ql_{QOS-CIBLE}-\mu_i}{\sigma_i})$ où erf est la fonction mathématique fonction erreur,
   - connaissant les liens disponibles et les probabilités sur chacun de ces liens appliquer une fonction de coût et déterminer le lien à utiliser pour satisfaire une qualité de service d'une requête Rq.

4. Procédé selon la revendication 3 où l'on utilise comme paramètre caractérisant un lien radio, le débit cible D$_{QOS\text{-}CIBLE}$ pour le paramètre QoS requis et le débit disponible sur le lien calculé D$_{LIEN}$.

5. Procédé selon la revendication 1 où l'on utilise comme paramètres de qualité de service à respecter tout paramètre caractérisant la qualité de service tel que le taux d'erreurs, la largeur de bande, la latence autorisée.

6. Procédé selon l'une des revendications 1 à 5 comportant aussi l'exécution d'une tâche de fond exécutée sur une station mobile (10i) en dehors de l'étape d'émission des données afin de sonder l'environnement radio d'une station mobile, en choisissant des valeurs de fréquences stockées dans la REMri et sur une zone élargie comprenant la cellule contenant la station mobile et des cellules voisines afin de déterminer les données de la REMri de la station mobile (10i).

7. Procédé selon l'une des revendications 1 à 6 où, sur réception d'une information d'événement prioritaire, l'algorithme d'analyse interrompt la communication en cours et attribue le lien radio à la communication prioritaire.

8. Procédé selon l'une des revendications 1 à 6 où sur réception d'un évènement modifiant l'environnement radio au cours d'une communication ou de l'établissement d'un lien de communication, l'information est remontée à l'algorithme d'analyse, et une modification est envoyée en retour pour s'adapter à la nouvelle situation.

9. Système pour la gestion de ressources radio au sein d'un réseau de communication R comprenant au moins une base de données centrale REM$_C$ contenant des informations relatives à la planification du réseau à un instant donné, une ou plusieurs stations mobiles (10i) comprenant une base de données (REMri, 22i) contenant des informations sur un environnement radio de la station mobile, dans lequel une station mobile (10i) est équipée :

   d'un module d'algorithme d'analyse REM (21) configuré pour analyser les paramètres de communication contenus dans une requête de communication Rq, en tenant compte de la qualité de service requise QoS et de paramètres caractérisant une situation radio dans une zone de couverture donnée et à un instant donné, le module d'algorithme d'analyse (21) étant configuré pour déterminer s'il existe une contrainte de latence Δt dans la requête Rq, et pour en déduire un délai d'attente Δt,
   d'un module de décision (23), fournissant en fonction du délai d'attente Δt l'autorisation d'initier une communication et les liens de communication à utiliser ou bien la transmission de la requête Rq à un module de temporisation (24),
   d'un module d'émission de données une fois la communication établie (26), et
   d'un module d'établissement d'un rapport (28) comprenant des informations sur la communication pour la base de données (22i) de la station mobile.

10. Système selon la revendication 9 où le module d'algorithme d'analyse (21) est adapté à exécuter les étapes suivantes :

   - calculer la valeur de QoS disponible,
   - calculer la probabilité que la QoS cible soit supportée par la QoS allouable sur un lien,
   - vérifier pour chaque fréquence/canal de la zone de couverture d'une station mobile la probabilité que la contrainte QoS cible est respectée, et en fonction de cette valeur de probabilité choisir le lien à attribuer.

11. Système selon la revendication 10 où le module d'algorithme d'analyse (21) est adapté à calculer des valeurs de probabilités en considérant comme paramètre de qualité de service le paramètre débit et à exécuter les étapes suivantes :

- prendre une hypothèse de distribution gaussienne,
- le paramètre caractérisant le lien radio : $QI_{QOS-CIBLE}$ étant connu dans la requête Rq, le paramètre QI caractérisant le lien étant calculé $QI_{LIEN}$ et avec $\mu_i$ et $\sigma_i$ respectivement la moyenne et l'écart-type associés à chaque lien radio $i$,
- déterminer la probabilité que le paramètre cible $QI_{QOS-CIBLE}$ soit inférieur au paramètre disponible $QI_{LIEN}$ allouable sur un lien radio i: Pr ($QI_{QOS-CIBLE} \leq QI_{LIEN}$) avec

$$\Pr\left(Ql_{QOS-CIBLE} \leq Ql_{LIEN}\right) = 1 - \mathrm{erf}\left(\frac{Ql_{QOS-CIBLE}-\mu_i}{\sigma_i}\right)$$ où erf est la fonction mathématique fonction erreur, et en ce que

- le module de décision est adapté à déterminer le lien à utiliser pour satisfaire une qualité de service d'une requête Rq en tenant compte des liens disponibles et des probabilités sur chacun de ces liens.

12. Système selon la revendication 11 où le paramètre caractérisant un lien radio est le débit cible $D_{QOS-CIBLE}$ pour le paramètre QoS requis et le débit disponible sur le lien calculé $D_{LIEN}$.

**Patentansprüche**

1. Verfahren zur Verwaltung von Funkressourcen in einem Kommunikationsnetzwerk R, beinhaltend mindestens eine zentrale Datenbank $REM_C$, welche Informationen zur Planung des Kommunikationsnetzwerks R zu einem gegebenen Zeitpunkt enthält, eine oder mehrere mobilen Stationen (10i), welche eine Datenbank (REMri, 22i) enthalten, welche Informationen über eine Funkumgebung der mobilen Station enthält, mindestens folgende Schritte beinhaltend:

• Übertragen einer Kommunikationsanfrage Rq, welche von einer mobilen Station (10i) an ein Analysealgorithmusmodul REM (21) und ebenfalls an eine Datenbank REMri (22) der mobilen Station gesendet wird, wobei die Kommunikationsanfrage Rq Merkmale in Zusammenhang mit den Vorgaben einer Dienstqualität QoS beinhaltet,
• Analysieren, durch den Analysealgorithmus, der Kommunikationsparameter, welche in der Anfrage Rq enthalten sind, unter Berücksichtigung der erforderlichen Dienstqualität QoS und von Parametern, welche eine Funksituation in einer gegebenen Bedeckungszone und zu einem gegebenen Zeitpunkt charakterisieren, welche durch die REMri gesendet werden,
• Bestimmen, ob eine Latenzvorgabe in der Anfrage Rq vorliegt und hieraus Ableiten einer Wartefrist $\Delta t$,
• wenn die Anfrage Rq die Wartefrist $\Delta t$ vor Herstellung der Kommunikation tolerieren kann, Übertragen der Anfrage Rq auf einen Zeitverzögerungsschritt (24) vor erneuter Analyse durch das Analysealgorithmusmodul REM (21),
• wenn die Anfrage Rq keine Verzögerung bei der Herstellung der Kommunikation tolerieren kann, Zuweisen (25) einer Kommunikationsverbindung an das mobile Endgerät, Initialisieren der Kommunikation (26), Übertragen der Daten und bei Abschluss der Kommunikation, Rückmelden an die Datenbank REMri eines Protokolls (28), welches Informationen zu den während der Kommunikation eingetretenen Ereignissen beinhaltet.

2. Verfahren nach Anspruch 1, bei welchem der Analysealgorithmus folgende drei Phasen beinhaltet:

- Berechnen des verfügbaren QoS-Wertes,
- Berechnen der Wahrscheinlichkeit, mit welcher die Ziel-QoS durch die einer Verbindung zuweisbare QoS unterstützt wird,
- Überprüfen für jede Frequenz/jeden Kanal der Bedeckungszone einer mobilen Station der Wahrscheinlichkeit, dass die Ziel-QoS-Vorgabe eingehalten wird, und angesichts dieses Wahrscheinlichkeitswertes, Auswählen der zuzuteilenden Verbindung.

3. Verfahren nach Anspruch 2, bei welchem die Berechnung der Wahrscheinlichkeiten unter Berücksichtigung eines Parameters, welcher die Funkverbindung QI charakterisiert, folgende Schritte beinhaltet:

- Annahme einer Hypothese einer gaußschen Verteilung,
- da der Zielparameter QI in der Anfrage Rq bekannt ist, der an der Verbindung verfügbare berechnete Parameter $QI_{LIEN}$ ist, und wobei $\mu_i$ und $\sigma_i$ jeweils dem Mittelwert und der Standardabweichung entsprechen, welche einer jeden Funkverbindung i zugeordnet sind, Bestimmen der Wahrscheinlichkeit, dass der Parameter $QI_{QOS\text{-}CIBLE}$ kleiner als der Parameter $QI_{LIEN}$ ist, der einer Funkverbindung i: $P_r(QI_{QOS\text{-}CIBLE} \leq QI_{LIEN})$ zuweisbar ist, wobei:

$$\Pr\left(Ql_{QOS-CIBLE} \leq Ql_{LIEN}\right) = 1 - \mathrm{erf}(\frac{Ql_{QOS-CIBLE}-\mu_i}{\sigma_i}),$$ wobei erf die mathematische Fehlerfunktion ist,

- wobei die verfügbaren Verbindungen und die Wahrscheinlichkeiten in jeder dieser Verbindungen bekannt sind, Anwenden einer Kostenfunktion und Bestimmen der zu verwendenden Verbindung, um eine Dienstqualität einer Anfrage Rq zu erfüllen.

4. Verfahren nach Anspruch 3, bei welchem man als Parameter, welcher eine Funkverbindung charakterisiert, die Ziel-Durchsatzrate $D_{QOS\text{-}CIBLE}$ für den erforderlichen Parameter QoS und die verfügbare berechnete Durchsatzrate in der Verbindung $D_{LIEN}$ verwendet.

5. Verfahren nach Anspruch 1, bei welchem man als Parameter der zu wahrenden Dienstqualität jeden beliebigen Parameter verwendet, welcher die Dienstqualität wie Fehlerrate, Bandbreite und zulässige Latenz charakterisiert.

6. Verfahren nach einem der Ansprüche 1 bis 5, ebenfalls beinhaltend die Ausführung einer Hintergrund-Task in einer mobilen Station (10i) zusätzlich zum Schritt der Datensendung, um die Funkumgebung einer mobilen Station zu sondieren, durch Wahl von in der REMri gespeicherten Frequenzwerten und über eine erweiterte Zone, welche die Zelle beinhaltet, welche die mobile Station und benachbarte Zellen enthält, um die Daten der REMri der mobilen Station (10i) zu bestimmen.

7. Verfahren nach einem der Ansprüche 1 bis 6, bei welchem, bei Empfang einer Information über ein vorrangiges Ereignis, der Analysealgorithmus die laufende Kommunikation unterbricht und die Funkverbindung der vorrangigen Kommunikation zuteilt.

8. Verfahren nach einem der Ansprüche 1 bis 6, bei welchem, bei Empfang eines Ereignisses, welches die Funkumgebung während einer Kommunikation oder bei Herstellung einer Kommunikationsverbindung verändert, die Information an den Analysealgorithmus weitergeleitet wird, und eine Änderung zurückgesandt wird, um sich an die neue Situation anzupassen.

9. System zur Verwaltung von Funkressourcen in einem Kommunikationsnetzwerk R, beinhaltend mindestens eine zentrale Datenbank $REM_C$, welche Informationen zur Planung des Netzwerks zu einem gegebenen Zeitpunkt enthält, eine oder mehrere mobilen Stationen (10i), welche eine Datenbank (REMri, 22i) enthalten, welche Informationen über eine Funkumgebung der mobilen Station enthält, bei welchem die mobile Station (10i) ausgerüstet ist:

    mit einem Analysealgorithmusmodul REM (21), welches zur Analyse der in einer Kommunikationsanfrage Rq enthaltenen Kommunikationsparameter konfiguriert ist, unter Berücksichtigung der Dienstqualität QoS und von Parametern, welche eine Funksituation in einer gegebenen Bedeckungszone und zu einem gegebenen Zeitpunkt charakterisieren, wobei das Analysealgorithmusmodul (21) konfiguriert ist, um zu bestimmen, ob eine Latenzvorgabe $\Delta t$ in der Anfrage Rq vorliegt, und um davon eine Wartezeit $\Delta t$ abzuleiten,
    mit einem Entscheidungsmodul (23), welches angesichts der Wartezeit $\Delta t$ die Genehmigung zur Initialisierung einer Kommunikation und die zu verwendenen Kommunikationsverbindungen bereitstellt, oder die Übertragung der Anfrage Rq an en Zeitverzögerungsmodul (24),
    mit einem Datensendemodul, sobald die Kommunikation hergestellt ist (26), und
    mit einem Modul zur Erstellung eines Berichts (28), welcher Informationen zur Kommunikation für die Datenbank (22i) der mobilen Station beinhaltet.

10. System nach Anspruch 9, bei welchem das Analysealgorithmusmodul (21) geeignet ist, um die folgenden Schritte auszuführen:

    - Berechnen des verfügbaren QoS-Wertes,
    - Berechnen der Wahrscheinlichkeit, mit welcher die Ziel-QoS durch die einer Verbindung zuweisbare QoS unterstützt wird,

- Überprüfen für jede Frequenz/jeden Kanal der Bedeckungszone einer mobilen Station der Wahrscheinlichkeit, dass die Ziel-QoS-Vorgabe eingehalten wird, und angesichts dieses Wahrscheinlichkeitswertes, Auswählen der zuzuteilenden Verbindung.

**11.** System nach Anspruch 10, bei welchem das Analysealgorithmusmodul (21) geeignet ist, Wahrscheinlichkeitswerte unter Betrachtung des Durchsatzratenparameters als Dienstqualitätsparameters zu berechnen und folgende Schritte auszuführen:

- Annahme einer Hypothese einer gaußschen Verteilung,
- da der die Funkverbindung charakterisierende Parameter $QI_{QOS-CIBLE}$ in der Anfrage Rq bekannt ist, der Parameter QI, welcher die Verbindung charakterisiert, berechnet ist $QI_{LIEN}$ und wobei $\mu_i$ und $\sigma_i$ jeweils der Mittelwert und die Standardabweichung sind, welche jeder Funkverbindung $i$ zugeordnet sind,
- Bestimmen der Wahrscheinlichkeit, dass der Parameter $QI_{QOS-CIBLE}$ kleiner als der verfügbare Parameter $QI_{LIEN}$ ist, welcher einer Funkverbindung i: Pr ($QI_{QOS-CIBLE} \leq QI_{LIEN}$) zuweisbar ist, wobei

$$\Pr\left(Ql_{QOS-CIBLE} \leq Ql_{LIEN}\right) = 1 - \mathrm{erf}(\frac{Ql_{QOS-CIBLE} - \mu_i}{\sigma_i}),$$ wobei erf die mathematische Fehlerfunktion ist, und dadurch, dass

- das Entscheidungsmodul geeignet ist, die zu verwendende Verbindung zu bestimmen, um eine Dienstqualität einer Anfrage Rq unter Berücksichtigung der verfügbaren Verbindungen und der Wahrscheinlichkeiten in einer jeder dieser Verbindungen zu erfüllen.

**12.** System nach Anspruch 11, bei welchem der eine Funkverbindung charakterisierende Parameter die Ziel-Durchsatzrate $D_{QOS-CIBLE}$ für den erforderlichen Parameter QoS und die verfügbare berechnete Durchsatzrate in der Verbindung $D_{LIEN}$ ist.

## Claims

**1.** Method for the management of radio resources in a communication network R comprising at least one central database $REM_C$ containing information relating to the scheduling of the communication network R at a given time, one or more mobile stations (10i) comprising a database (REMri, 22i) containing information on a radio environment of the mobile station, comprising at least the following steps:

• transmitting a communication request Rq sent by a mobile station (10i) to a REM analysis algorithm module (21) and also to a REMri database (22) of the mobile station, the communication request Rq comprising characteristics related to constraints of a quality of service QoS,
• analysing, by the analysis algorithm, the communication parameters contained in the request Rq taking account of the required quality of service QoS and of parameters characterizing a radio situation in a given coverage area and at a given time sent by the REMri,
• determining if a latency constraint exists in the request Rq, and deducting a time delay $\Delta t$ therefrom;
• if the request Rq is able to tolerate the time delay $\Delta t$ before the communication is established, transmitting the request Rq to a time-delay step (24) before it is analysed again by the REM analysis algorithm module (21),
• if the request Rq cannot tolerate a delay in establishing the communication, then allocating (25) a communication link to the mobile terminal, initiating the communication (26), transmitting data and at the end of the communication feed back to the REMri database a report (28) containing information on events that occurred during the communication.

**2.** Method according to Claim 1, wherein the analysis algorithm comprises the following three phases:

- calculating the available QoS value,
- calculating the probability that the target QoS is supported by the QoS that can be allocated to a link,
- verifying for each frequency/channel of the coverage area of a mobile station the probability that the target QoS constraint will be complied with, and choosing the link to be allocated as a function of that probability value.

**3.** Method according to Claim 2, **characterized in that** the calculation of the probabilities considering a parameter characterizing the radio link QI comprises the following steps:

- adopting a Gaussian distribution hypothesis,
- the target parameter QI being known in the request Rq, the parameter available on the link being calculated $QI_{LIEN}$ and with $\mu_i$ and $\sigma_i$ respectively corresponding to the mean value and to the standard deviation associated with each radio link i, determining the probability that the parameter $QI_{QOS\text{-}CIBLE}$ is less than the parameter $QI_{LIEN}$ that can be allocated to a radio link i: $P_r$ ($QI_{QOS\text{-}CIBLE} \leq QI_{LIEN}$) with:

$$\Pr\left(Ql_{QOS-CIBLE} \leq Ql_{LIEN}\right) = 1 - \mathrm{erf}(\frac{Ql_{QOS-CIBLE}-\mu_i}{\sigma_i})$$ where erf is the mathematical error function ,

- knowing the available links and the probabilities for each of those links, applying a cost function and determining the link to be used to satisfy a quality of service of a request Rq.

4. Method according to Claim 3 wherein, as a parameter characterizing a radio link, the target data rate $D_{QOS\text{-}CIBLE}$ for the required QoS parameter and the calculated available data rate on the link $D_{LIEN}$ is used.

5. Method according to Claim 1, wherein, as parameters for quality of service to be complied with, is used any parameter characterizing the quality of service such as the error rate, the bandwidth, the authorised latency.

6. Method according to any one of Claims 1 to 5, either comprising the execution of a background task executed on a mobile station (10i) outside the step of sending data in order to probe the radio environment of a mobile station, choosing frequency values stored in the REMri and over a widened area comprising the cell containing the mobile station and adjacent cells in order to determine the data of the REMri of the mobile station (10i).

7. Method according to any one of Claims 1 to 6, wherein, upon reception of priority event information, the analysis algorithm interrupts the current communication and allocates the radio link to the priority communication.

8. Method according to any one of Claims 1 to 6, wherein, upon reception of an event modifying the radio environment during a communication or while establishing a communication link, the information is sent to the analysis algorithm and a modification is sent in return to adapt to the new situation.

9. System for the management of radio resources in a communication network R comprising at least one central database $REM_C$ containing information relating to the scheduling of the communication network at a given time, and one or more mobile stations (10i) comprising a database (REMri, 22i) containing information on a radio environment of the mobile station, wherein the mobile station (10i) is equipped with
a REM analysis algorithm module (21) configured to analyse communication parameters contained in a communication request Rq, taking account of the required quality of service QoS and of parameters characterizing a radio situation in a given coverage area and at a given time, the analysis algorithm module (21) being configured to determine if there is a latency constraint $\Delta t$ in the request Rq and to deduce a waiting delay $\Delta t$ therefrom,
a decision module (23), supplying, on the basis of the waiting delay $\Delta t$, the authorization to initiate a communication and the communication links to be used or the transmission of the request Rq to a time-delay module (24),
a module sending data once the communication is established (26),
and
a module establishing a report (28) comprising information on the communication for the database (22i) of the mobile station.

10. System according to Claim 9, wherein the analysis algorithm module (21) is adapted to execute the following steps:

- calculating the available QoS value,
- calculating the probability that the target QoS is supported by the QoS that can be allocated to a link,
- verifying for each frequency/channel of the coverage area of a mobile station the probability that the target QoS constraint will be complied with, and choosing the link to be allocated as a function of that probability value.

11. System according to Claim 10 wherein the analysis algorithm module (21) is adapted to calculate probability values considering as a quality of service parameter the data rate parameter and to execute the following steps:

- adopting a Gaussian distribution hypothesis,
- the parameter $QI_{QOS\text{-}CIBLE}$ characterizing the radio link being known in the request Rq, the QI parameter characterizing the link being calculated $QI_{LIEN}$ and, with $\mu_i$ and $\sigma_i$ respectively being the mean value and the standard deviation associated with each radio link i,

- determining the probability that the target parameter $QI_{QOS\text{-}CIBLE}$ is less than the available parameter $QI_{LIEN}$ that can be allocated to a radio link i: $P_r$ ($QI_{QOS\text{-}CIBLE} \leq QI_{LIEN}$) with:

$$\Pr\left(Ql_{QOS-CIBLE} \leq Ql_{LIEN}\right) = 1 - \mathrm{erf}\left(\frac{Ql_{QOS-CIBLE} - \mu_i}{\sigma_i}\right)$$ where erf is the mathematical error function, and in that
- the decision module is adapted to determine the link to be used to satisfy a quality of service of a request Rq taking account of the available links and the probabilities for each of those links.

12. System according to Claim 11, wherein the parameter characterizing a radio link is the target data rate $D_{QOS\text{-}CIBLE}$ for the required QoS parameter and the calculated available data rate on the link $D_{LIEN}$.

FIG.1

FIG.3

FIG.2A

FIG.2B

EP 3 241 393 B1

| Disponible usage prédictible $D_u$ | Réservé $D_r$ | En utilisation $D_a$ |
|---|---|---|

Débit disponible zone couverture

# FIG.4

$D_{LIEN}$

Radio 1

Débit estimé
$\mu_1 = 1Mbps$
$\sigma_1 = 450kbps$

Radio 2

$QoS_1$
1Mbps

Débit estimé
$\mu_2 = 800kbps$
$\sigma_2 = 200kbps$

$QoS_2$
600kbps

# FIG.5A

|  | $QoS_1$ 1Mbps | $QoS_2$ 600kbps |
|---|---|---|
| Proba (Radio 1>QoS) | 0.5 | 0.81 |
| Proba (Radio 2>QoS) | 0.11 | 0.84 |

# FIG.5B

FIG.6

FIG.7A

FIG.7B

FIG.7C

FIG.7D

**EP 3 241 393 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2014045736 A

**Littérature non-brevet citée dans la description**

• **A. VIZIELLO.** Cognitive radio resource management exploiting heterogeneous primary users and a radio environment map. *Wireless Netw,* 2013, vol. 19, 1203-1216